# EUROPEAN PATENT APPLICATION

(11) **EP 2 472 635 A1**
(43) Date of publication of application: **04.07.2012**
(21) Application number: 10811625.2
(22) Date of filing: 14.07.2010
(51) Int. Cl.: H01M 2/10, H01M 2/20, H01M 2/30

(54) **ASSEMBLED BATTERY AND ASSEMBLED BATTERY MANUFACTURING METHOD**

(30) Priority: 28.08.2009 JP 2009197734
(71) Applicant: Nissan Motor Company Limited, Yokohama-shi, Kanagawa 221-0023 (JP)
(72) Inventor: AMAGAI, Ryuichi, Atsugi-shi Kanagawa 243-0123 (JP); NAKAI, Masayuki, Atsugi-shi Kanagawa 243-0123 (JP); TODOROKI, Naoto, Atsugi-shi Kanagawa 243-0123 (JP)
(74) Representative: Grünecker, Kinkeldey, Stockmair & Schwanhäusser
(86) International application number: PCT/JP2010/061914
(87) International publication number: WO 2011/024574

(57) **Abstract**

The present invention has been made to provide a battery pack having multiple battery modules each housing a stacked body in which multiple secondary batteries are stacked, and a method of manufacturing such a battery pack, which are capable of reducing the number of voltage detection wires for detecting voltages of the respective secondary batteries housed in the battery modules forming the battery pack. The battery pack includes: multiple battery modules (10A, 10B) each including a stacked body (20) in which multiple secondary batteries (30) are stacked, a pair of output terminals (60, 70), and a voltage detection terminal (80) which is used to detect terminal voltages of the secondary batteries and which has a rated current equal to or larger than a rated current of the pair of output terminals; and a bus bar (930) electrically connecting the voltage detection terminals of the multiple battery modules to each other.

## Description

### TECHNICAL FIELD

The present invention relates to a battery pack including multiple battery modules each housing a stacked body in which multiple secondary batteries are stacked, and a method of manufacturing the battery pack.

### BACKGROUND ART

Japanese Patent Application Publication 2007-59088 discloses the following battery pack as a battery pack formed by combining multiple battery modules each housing multiple secondary batteries. In the battery pack, a voltage detection line is connected to an electrode tab of each of the secondary batteries housed in each of the battery modules forming the battery pack. The battery pack detects the voltages of the secondary batteries via the voltage detection wires, and controls charging and discharging of the secondary batteries housed in the battery modules forming the battery pack on the basis of the detected voltages.

### SUMMARY OF INVENTION

### TECHNICAL PROBLEM

However, in the battery pack described above, the voltage detection wires are connected respectively to the electrode tabs of the secondary batteries housed in the battery modules forming the battery pack. Thus, the number of voltage detection wires is large, and wiring work of the voltage detection wires is thereby cumbersome. Particularly, in a battery pack using flat-shaped secondary batteries, the number of secondary batteries forming the battery pack is generally increased. Thus, the number of voltage detection wires is further increased, and wiring work of the voltage detection wires is thereby cumbersome.

An object of the present invention is to provide a battery pack having multiple battery modules each housing a stacked body in which multiple secondary batteries are stacked, and a method of manufacturing such a battery pack, which are capable of reducing the number of voltage detection wires for detecting voltages of the respective secondary batteries housed in the battery modules forming the battery pack.

### SOLUTION TO PROBLEM

A first aspect of the present invention is a battery pack including: multiple battery modules each including a stacked body in which multiple secondary batteries are stacked, a pair of output terminals, and a voltage detection terminal which is used to detect terminal voltages of the respective secondary batteries and which has a rated current equal to or larger than a rated current of the pair of output terminals; and a bus bar electrically connecting the voltage detection terminals of the multiple battery modules to each other.

In addition, a second aspect of the present invention is a method of manufacturing a battery pack including multiple battery modules including: stacking multiple secondary batteries; obtaining a cell unit by electrically connecting electrode tabs of each of the multiple stacked secondary batteries respectively to a voltage detection terminal and a pair of output terminals, in conformity with an electrical circuit of the multiple battery modules, the voltage detection terminal used to detect terminal voltages of the respective secondary batteries and having a rated current equal to or larger than a rated current of the pair of output terminals; obtaining each of the multiple battery modules by housing the cell unit in a case; and stacking the multiple battery modules and electrically connecting the voltage detection terminals of the multiple battery modules to each other with a bus bar.

### BRIEF DESCRIPTION OF DRAWINGS

[Fig. 1] Fig. 1 is a perspective view showing a battery module of an embodiment of the present invention.
[Fig. 2] Fig. 2 is a perspective view of a cell unit of the battery module viewed from a side where tabs are led out.
[Fig. 3] Fig. 3 is a perspective view showing a single cell housed in the battery module of the embodiment of the present invention.
[Fig. 4] Fig. 4 is an exploded perspective view showing an inner structure of the battery module of the embodiment of the present invention.
[Fig. 5] Fig. 5 is a view showing an electrical connection configuration of single cells forming the battery module.
[Fig. 6] Fig. 6 is a perspective view showing a battery pack of the embodiment of the present invention.
[Fig. 7] Fig. 7 is a view showing the battery pack of the embodiment the present invention in a state before external bus bars are attached thereto.
[Fig. 8] Fig. 8 is a view showing an electrical connection configuration of the single cells housed in the battery modules forming the battery pack of the embodiment of the present invention.
[Fig. 9] Fig. 9 is a plan view showing a battery pack of another embodiment of the present invention.

### DESCRIPTION OF EMBODIMENTS

Specific embodiments to which the present invention is applied are described below in detail with reference to the drawings.

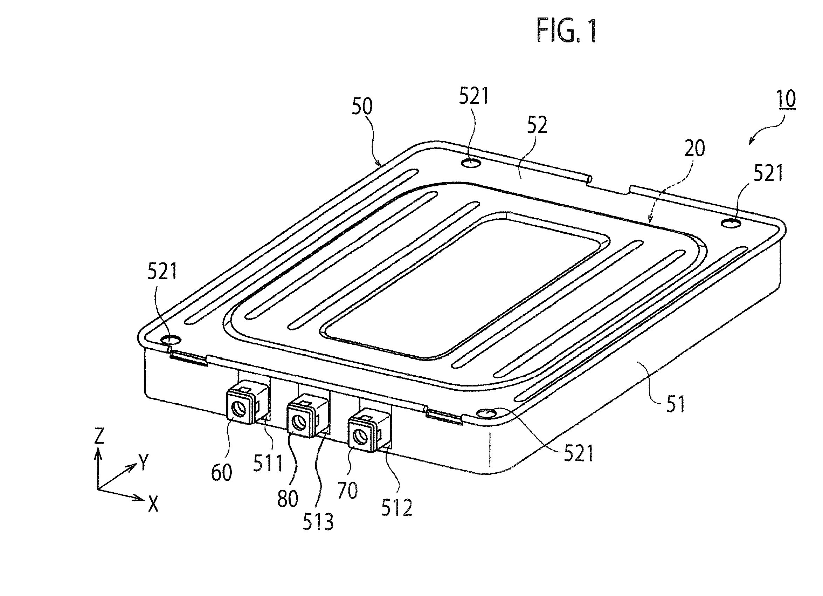

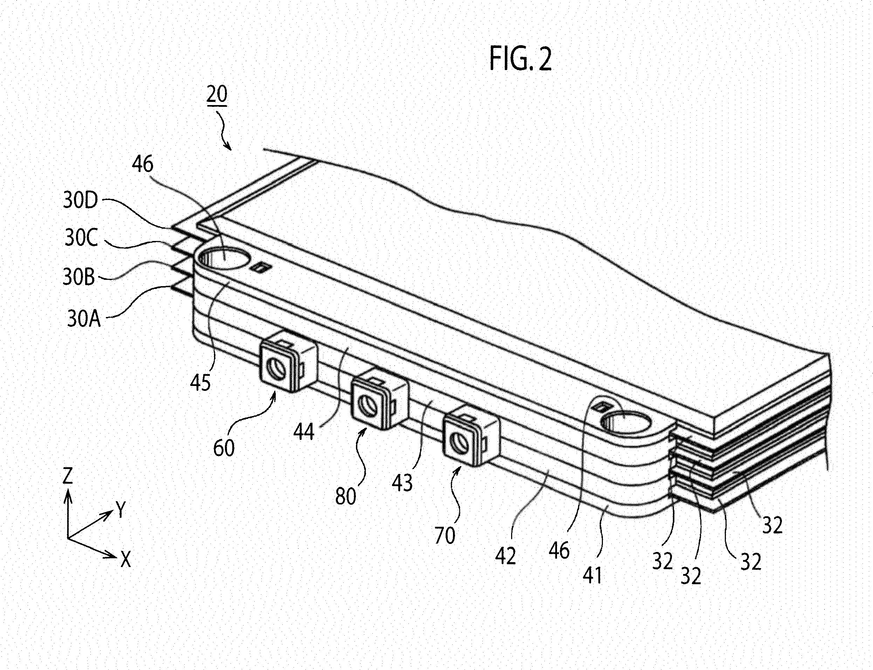

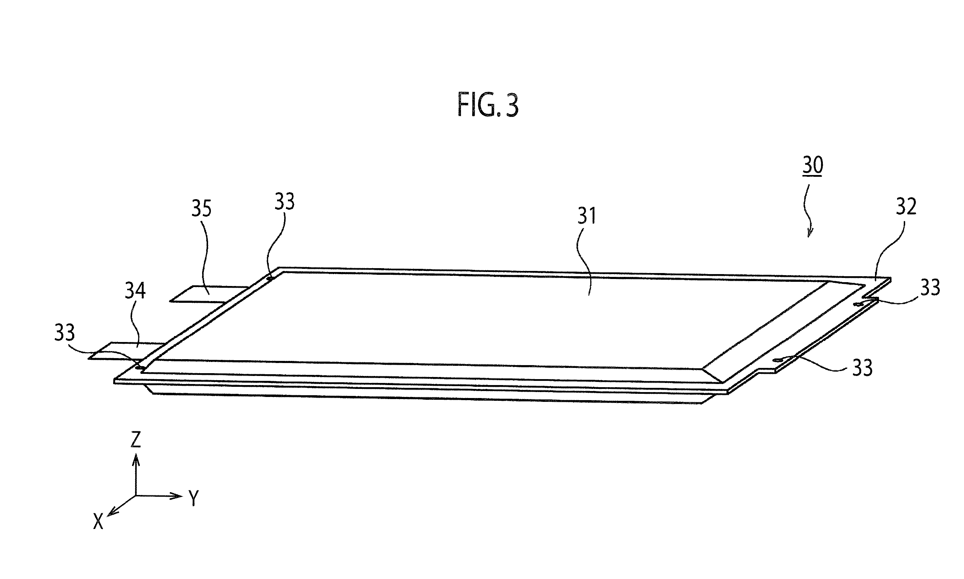

As shown in Fig. 1, a battery module 10 of an embodiment is a unit in assembling a battery pack 90 to be described later, and includes a cell unit 20 (see Figs. 2 and 3) and a case 50. The cell unit 20 includes multiple (four in this example) single cells 30 and the case 50 houses the cell unit 20 therein.

As shown in Fig. 2, the cell unit 20 includes four single cells 30A to 30D (a first single cell 30A, a second single cell 30B, a third single cell 30C, and a fourth single cell 30D), spacers 41 to 45 (first spacer 41, second spacer 42, third spacer 43, fourth spacer 44, fifth spacer 45) fitted to both ends of the single cells 30A to 30D, an external output positive terminal 60, an external output negative terminal 70, and a voltage detection terminal 80.

As shown in Fig. 3, each of the single cells (cells) 30 is, for example, a flat-shaped lithium ion secondary battery in which a power generation element formed of an electrolyte and an electrode stacked body is housed inside an external member 31 and which has an almost rectangular shape in a plan view. In the electrode stacked body, positive plates and negative plates are alternately stacked with a separator interposed between one another. Note that, the single cell 30 is a generic term for the single cells 30A to 30D.

The external member 31 of each single cell 30 is formed of, for example, a laminated film formed by laminating synthetic resin layers on both faces of a metal foil. Four sides of the external member 31 are thermal-fusion-bonded to form a flange 32 with the power generation element housed in the external member 31. Thus, the external member 31 houses the power generation element therein in a sealed manner.

Moreover, the positive plates and the negative plates forming the power generation element described above are connected to a positive tab 34 and a negative tab 35 led out to the outside from the external member 31, respectively, in the external member 31. The positive tab 34 and the negative tab 35 are both led out to the outside from a short side of the external member 31 on one end side in a longitudinal direction. Fixing holes 33 to which fixing pins of the spacers to be described later are respectively inserted are formed in short sides of the flange 32 which are on both end sides in the longitudinal direction.

In the cell unit 20, the four single cells 30A to 30D form a stacked body in which the four single cells 30A to 30D are stacked to be in direct contact with one another on main surfaces thereof. Moreover, the electrode tabs 34, 35 of the respective single cells 30A to 30D extend outward in a same direction orthogonal to the stacked direction (Z direction) of the single cells 30A to 30D. As shown in Fig. 2, in end portions of the single cells 30A to 30D where the electrode tabs 34 are led out, the five spacers 41 to 45 are fitted. The spacers 41 to 45 are locked and connected in a state stacked one on top of another, and thus determine a pitch in the stacked direction of the single cells 30A to 30D.

The flange 32 of the first single cell 30A of the lowest stage is positioned between the first spacer 41 and the second spacer 42. Moreover, the flange 32 of the second single cell 30B is positioned between the second spacer 42 and the third spacer 43, and the flange 32 of the third single cell 30C is positioned between the third spacer 43 and the fourth spacer 44. Furthermore, the flange 32 of the fourth single cell 30D is positioned between the fourth spacer 44 and the fifth spacer 45. Note that, although not particularly illustrated, five spacers are fitted to end portions of the four single cells 30A to 30D where no electrode tabs 34, 35 are led out.

Moreover, as shown in Fig. 2, the external output positive terminal 60 and the external output negative terminal 70 being output terminals of the battery module 10 as well as the voltage detection terminal 80 used to detect voltages of the single cells 30A to 30D forming the battery module 10 are led out from the first to fifth spacers 41 to 45.

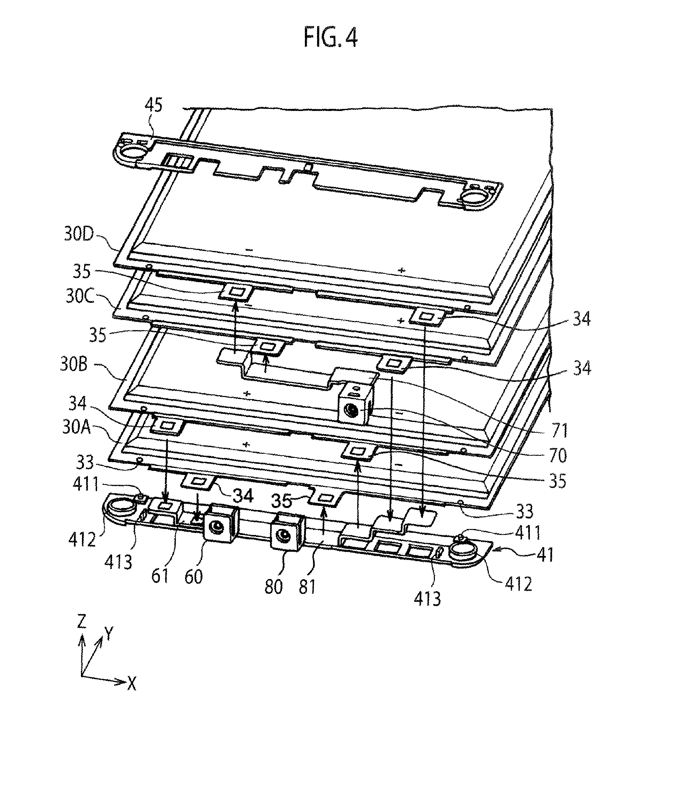

Fig. 4 is a perspective view showing the single cells 30 housed in the battery module 10. As shown in Fig. 4, the positive tabs 34 of the first single cell 30A and the second single cell 30B are joined to an internal bus bar 61 by ultrasonic welding or the like, the internal bus bar 61 electrically connected to the external output positive terminal 60. Meanwhile, the negative tabs 35 of the first single cell 30A and the second single cell 30B are joined to an internal bus bar 81 together with the positive tabs 34 of the third single cell 30C and the fourth single cell 30D by ultrasonic welding or the like, the internal bus bar 81 electrically connected to the voltage detection terminal 80. Moreover, the negative tabs 35 of the third single cell 30C and the fourth single cell 30D are joined to an internal bus bar 71 by ultrasonic welding or the like, the internal bus bar 71 electrically connected to the external output negative terminal 70.
The external output positive terminal 60, the external output negative terminal 70, and the voltage detection terminal 80 are fixed to the first to fifth spacers 41 to 45 fitted to the end portions of the single cells 30A to 30D (specifically, to the flanges 32 on the one end side in the longitudinal direction). Thus, external forces inputted from the terminals 60, 70, 80 are not transmitted to the positive tabs 34 and the negative tabs 35 of the respective cells via the internal bus bars 61, 71, 81.

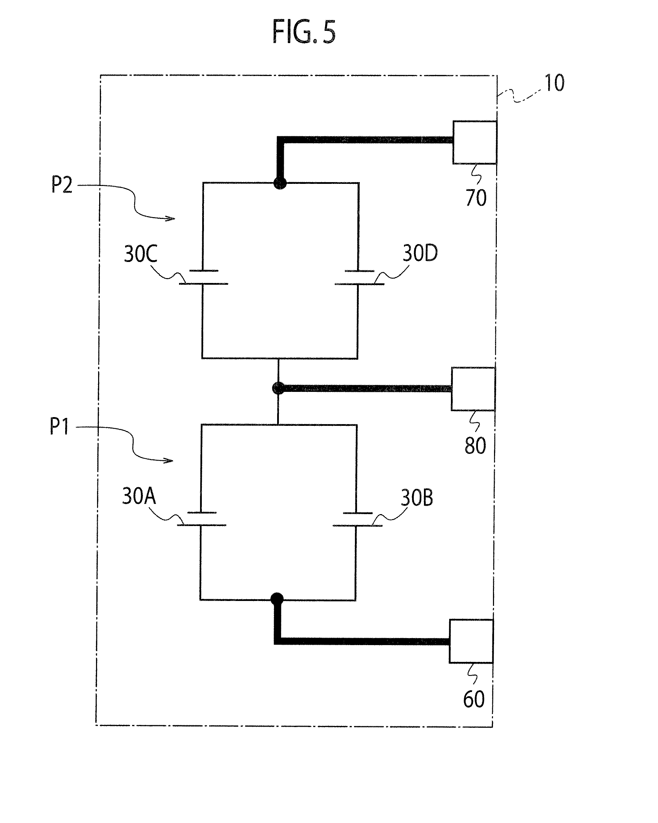

The electrode tabs 34, 35 of the single cells 30A to 30D are connected to the external output positive terminal 60, the external output negative terminal 70, and the voltage detection terminal 80 via the internal bus bars 61, 71, 81, and thus the single cells 30A to 30D form a connection configuration of two parallel two series as shown in Fig. 5. In the description, L parallel M series (L, M are each an integer equal to or larger than two) means a circuit configuration in which M blocks (hereinafter, referred to as parallel block) each having L single cells connected in parallel are connected in series. Accordingly, the two parallel two series in the embodiment means a circuit configuration in which a parallel block P1 having the single cell 30A and the single cell 30B connected in parallel and a parallel block P2 having the single cell 30C and the single cell 30D connected in parallel are connected to each other in series.

As shown in Fig. 5, the voltage detection terminal 80 is a terminal used to detect the voltages of the single cells 30A to 30D forming the battery module 10. Specifically, the voltages of the first single cell 30A and the second single cell 30B can be detected by using the external output positive terminal 60 and the voltage detection terminal 80 to measure a voltage between these terminals. Moreover, the voltages of the third single cell 30C and the fourth single cell 30D can be detected by using the external output negative terminal 70 and the voltage detection terminal 80 to measure a voltage between these terminals.

It is desirable that the external output positive terminal 60, the external output negative terminal 70, and the voltage detection terminal 80 are formed of terminals through which currents corresponding to battery capacities of the respective single cells 30 housed in the battery module 10 can flow. Particularly, the embodiment uses, as the voltage detection terminal 80, a terminal having a rated current equal to or larger than those of the external output positive terminal 60 and the external output negative terminal 70 (or a terminal having a maximum allowable current equal to or larger than those of the external output positive terminal 60 and the external output negative terminal 70, the maximum allowable current being the maximum value of a current allowed to flow through the terminal). Although any terminal having a rated current equal to or larger than those of the external output positive terminal 60 and the external output negative terminal 70 can be used as the voltage detection terminal 80, manufacturing steps of the battery module 10 can be made simple by using the same terminal as the external output positive terminal 60 and the external output negative terminal 70 (i.e. a terminal having a rated current equal to those of the external output positive terminal 60 and the external output negative terminal 70).

The first spacer 41 is an almost-plate-shaped member made of a material having an excellent electric insulating property, such as a synthetic resin. As shown in Fig. 4, two fixing pins 411 to be inserted into the fixing holes 33 of the flange 32 of the first single cell 30A are formed on an upper surface of the first spacer 41. Moreover, sleeve insertion holes 412 to which sleeves 46 (see Fig. 2) are to be inserted are formed in both ends of the first spacer 41, respectively. The engagement claws 413 protruding upward are formed near the respective sleeve insertion holes 412. The first spacer 41 and the second spacer 42 are connected to each other by causing the engagement claws 413 to engage with engagement holes (not illustrated) formed in a lower surface of the second spacer 42.

Moreover, each of the second to fourth spacers 42 to 44 shown in Fig. 2 is also made of a material having an excellent electric insulating property, such as a synthetic resin, and has fixing pins, sleeve insertion holes, and engagement claws formed therein as in the first spacer 41. The fixing pins of the spacers 41 to 44 are inserted into the fixing holes 33 formed in the flanges 32 in both end portions of the single cells 30 in the longitudinal direction, and thus positions of the respective single cells 30A to 30D in a surface direction (X direction or Y direction) are determined. Meanwhile, the fifth spacer 45 is also made of a material having an excellent electric insulating property, such as a synthetic resin. However, in the fifth spacer 45, no fixing pins or engagement claws are formed, and only sleeve insertion holes are formed. Note that, the second to fourth spacers 42 to 44 are not illustrated in Fig. 4.

Returning to Fig. 1, the cell unit 20 configured as described above are housed inside the case 50 shown in Fig. 1. The case 50 is a case protecting the fragile single cells 30A to 30D of the cell unit 20. The case 50 has a lower case 51 having a box shape with a bottom and an opening in an upper portion, and an upper case 52 closing the opening of the lower case 51. The lower case 51 and the upper case 52 are seamed together in their edge portions, and are thus fixed to each other. Forming the battery module 10 by housing the cell unit 20 in the case 50 allows the battery pack 90 to be described later to be assembled without worrying about the fragility of the single cells 30A to 30D.

As shown in Fig. 1, the upper case 52 has four bolt insertion holes 521 formed at positions corresponding to the sleeves 46 of the cell unit 20, respectively. Although not particularly illustrated, the lower case 51 also has four bolt insertion holes formed at positions corresponding to the sleeves 46 of the cell unit 20, respectively. The position of the cell unit 20 is fixed in the case 50 by inserting bolts into the insertion holes 521 of the upper case 52, the sleeves 46 of the cell unit 20, and the insertion holes of the lower case 51.

As shown in Fig. 1, three cutouts 511, 512, 513 are formed in a side surface of the lower case 51 on the one end side in the longitudinal direction. The external output positive terminal 60, the external output negative terminal 70, and the voltage detection terminal 80 are led out respectively from the cutouts 511, 512, 513.

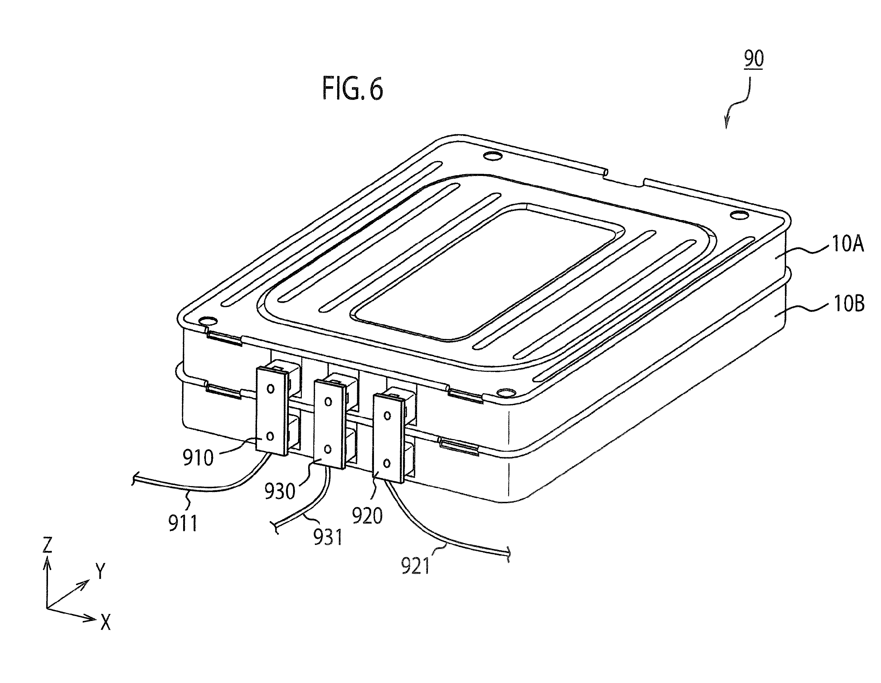

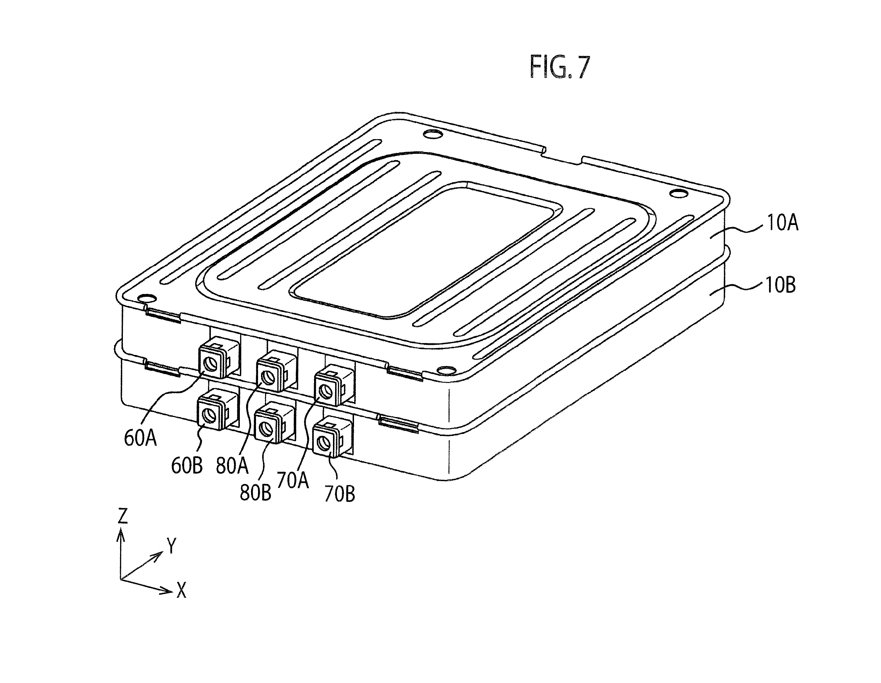

Moreover, in the embodiment, two battery modules 10 of the embodiment which are configured as described above can be combined as shown in Fig. 6 to form the battery pack 90. Fig. 6 is a perspective view showing the battery pack 90 of the embodiment, and Fig. 7 is a view showing the battery pack 90 in a state before external bus bars 910, 920, 930 are attached thereto. Note that, in Figs. 6 and 7, the battery modules forming the battery pack 90 are respectively a first battery module 10A and a second battery module 10B.

As shown in Figs. 6 and 7, the battery pack 90 of the embodiment is configured by stacking the first battery module 10A and the second battery module 10B to form a stacked body, and also by electrically connecting external output positive terminals 60A, 60B, external output negative terminals 70A, 70B, and voltage detection terminals 80A, 80B of the battery modules 10A, 10B to each other by the external bus bars 910, 920, 930. Specifically, the external output positive terminals 60A, 60B of the respective battery modules 10A, 10B are electrically connected to each other by the external bus bar 910. the external output negative terminals 70A 70B thereof are electrically connected to each other by the external bus bar 920, and the voltage detection terminals 80A, 80B thereof are electrically connected to each other by the external bus bar 930. Note that, each of the terminals 60A, 60B. 70A, 70B, 80A, 80B and corresponding one of the external bus bars 910, 920, 930 can be fixed to each other at a female screw portion (not illustrated) formed in each of the terminals 60A, 60B, 70A, 70B, 80A, 80B, by using a fixing bolt. Thus, each of the terminals 60A, 60B, 70A, 70B, 80A, 80B and corresponding one of the external bus bars 910, 920, 930 are in tight contact with each other, and are thereby electrically connected to each other.

Note that, in the embodiment, each of the external bus bars 910, 920, 930 is desirably made of such a material and in such a shape (cross-sectional shape, particularly) that currents corresponding to battery capacities of the single cells 30 housed in the battery modules 10A, 10B can flow therethrough. In the embodiment, the external bus bars 910, 920, 930 are configured such that a current equal to or larger than rated currents (or the maximum allowable current) of the external output positive terminals 60A, 60B, the external output negative terminals 70A, 70B, and the voltage detection terminals 80A, 80B can flow therethrough without causing defects such as heat generation. Specifically, as shown in Fig. 6, each of the external bus bars 910, 920, 930 can be formed of a plate-shaped conductive member.

Moreover, as shown in Fig. 6, voltage detection wires 911, 921, 931 are connected respectively to the external bus bars 910, 920, 930, and these wires are connected to a voltage sensor not illustrated.

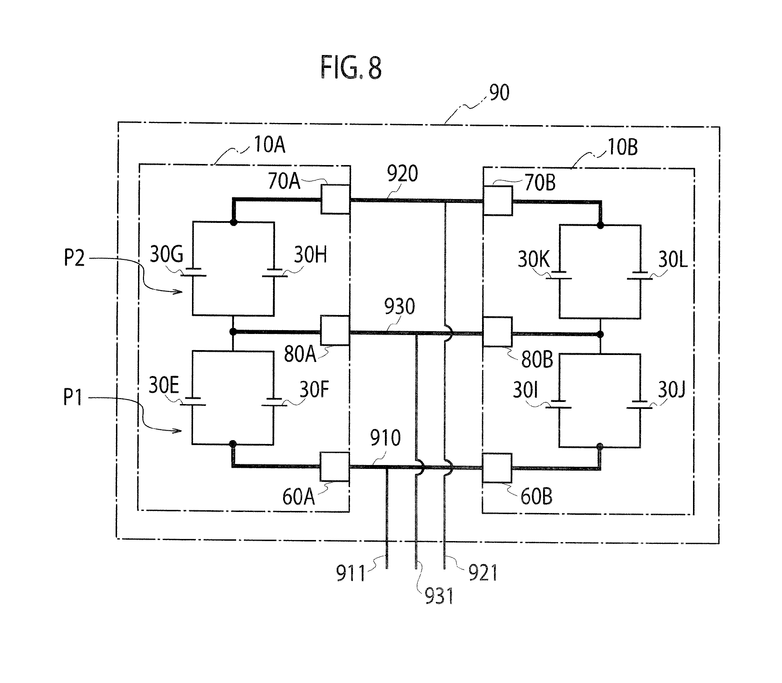

Fig. 8 shows an electrical connection configuration of single cells housed in the battery modules 10A, 10B forming the battery pack 90. Note that, in Fig. 8, single cells forming the battery module 10A are shown as single cells 30E to 30H and single cells forming the battery module 10B are shown as single cells 30I to 30L.

As shown in Fig. 8, the battery modules 10A, 10B forming the battery pack 90 have the external output positive terminals 60A, 60B, the external output negative terminals 70A, 70B, and the voltage detection terminals 80A, 80B connected to each other by the external bus bars 910, 920, 930, and thus have a circuit configuration of four parallel two series. The four parallel two series in the embodiment means a circuit configuration in which a parallel block P1 and a parallel block P2 are connected in series, the parallel block P1 having the single cell 30E and the single cell 30F in the battery module 10A and the single cell 30I and the single cell 30J in the battery module 10B connected in parallel, the parallel block P2 having the single cell 30G and the single cell 30H of the battery module 10A and the single cell 30K and the single cell 30L of the battery module 10B connected in parallel. In other words, in the battery pack 90, parallel blocks in one battery module forming a stacked body are connected in parallel respectively to parallel blocks in another battery module forming the stacked body.

Then, the voltage detection wire 911 connected to the external bus bar 910 and the voltage detection wire 931 connected to the external bus bar 930 are connected to the voltage sensor (not illustrated), and thus the voltages of the single cells 30E, 30F, 30I, 30J can be detected. Similarly, the voltage detection wire 921 connected to the external bus bar 920 and the voltage detection wire 931 connected to the external bus bar 930 are connected to the voltage sensor (not illustrated), and thus the voltages of the single cells 30G 30H, 30K, 30L can be detected.

As described above, in the embodiment, the battery modules 10A, 10B forming the battery pack 90 are configured to include the voltage detection terminals 80A, 80B for voltage detection which has a rated currents equal to or larger than those of the external output positive terminals 60A, 60B and the external output negative terminals 70A, 70B, and the voltage detection terminals 80A, 80B of the battery module 10A, 10B are electrically connected to each other by the external bus bar 930. Thus, in the embodiment, the number of voltage detection wires for detecting the terminal voltages of the single cells 30E to 30H and the single cells 301 to 30L forming the battery modules 10A. 10B forming the battery pack 90 can be reduced to three (can be reduced to the minimum), which are the voltage detection wires 911, 921, 931. Thus, wiring work of the voltage detection wires can be made simple. In addition, since the number of voltage detection wires are reduced, the number of pins in a control substrate can be reduced and so on, thus achieving reduction in cost and space.

Furthermore, in the embodiment, the voltage detection terminals 80A, 80B are each formed of a terminal having a rated current equal to or larger than those of the external output positive terminals 60A, 60B and the external output negative terminals 70A. 70B (or having a maximum allowable current equal to or larger than those of the external output positive terminals 60A, 60B and the external output negative terminals 70A, 70B). Thus, the following effects can be obtained. Assume a case where there is a failure in one of the single cells forming, for example, the battery module 10A (or 10B) among the single cells 30E to 30H forming the battery module 10A and the single cells 301 to 30L forming the battery module 10B, and this failure causes increase in the amount of currents flowing to the working single cells, particularly to the single cells forming the other battery module 10B (or 10A). Even in such a case, troubles such as heat generation and breakage of the voltage detection terminal 80B (or 80A) of the other battery module 10B (or 10A) can be effectively prevented from occurring. Particularly, when the single cell forming the battery modules 10A, 10B fails due to a short circuit, an electric power charged in the failed single cell is outputted, and this causes a relatively large current to flow instantaneously. Even in such a case also, troubles such as heat generation and breakage of the voltage detection terminal 80 can be effectively prevented from occurring.

Moreover, in the embodiment, the external bus bar 930 electrically connecting the voltage detection terminals 80A, 80B to each other are configured such that a current equal to or larger than the rated current (or the maximum allowable current) of the voltage detection terminals 80A, 80B can flow therethrough. Accordingly, as described above, even when there is a failure in one of the single cells forming the battery modules 10A, 10B, troubles such as heat generation, breakage, and disconnection of the external bus bar 930 can be effectively prevented from occurring.

Furthermore, in the embodiment, the external output positive terminals 60A, 60B, the external output negative terminals 70A, 70B and the voltage detection terminals 80A, 80B are connected to each other by the external bus bars 910, 920, 930 by using the fixing bolts. Thus, the terminals 60A, 60B, 70A, 70B, 80A, 80B can be electrically connected to each other more easily.

Note that, in the embodiment described above, the single cells 30 correspond to secondary batteries of the present invention, the external output positive terminals 60, 60A, 60B and the external output negative terminals 70, 70A, 70B correspond to output terminals of the present invention, and the external bus bars 910, 920, 930 correspond to bus bars of the present invention.

The embodiment of the present invention has been described above. However, the embodiment is merely an example described to facilitate the understanding of the present invention, and the present invention is not limited to the embodiment. The elements disclosed in the embodiment described above are intended to include any types of design modifications and equivalents pertaining to the technical scope of the invention.

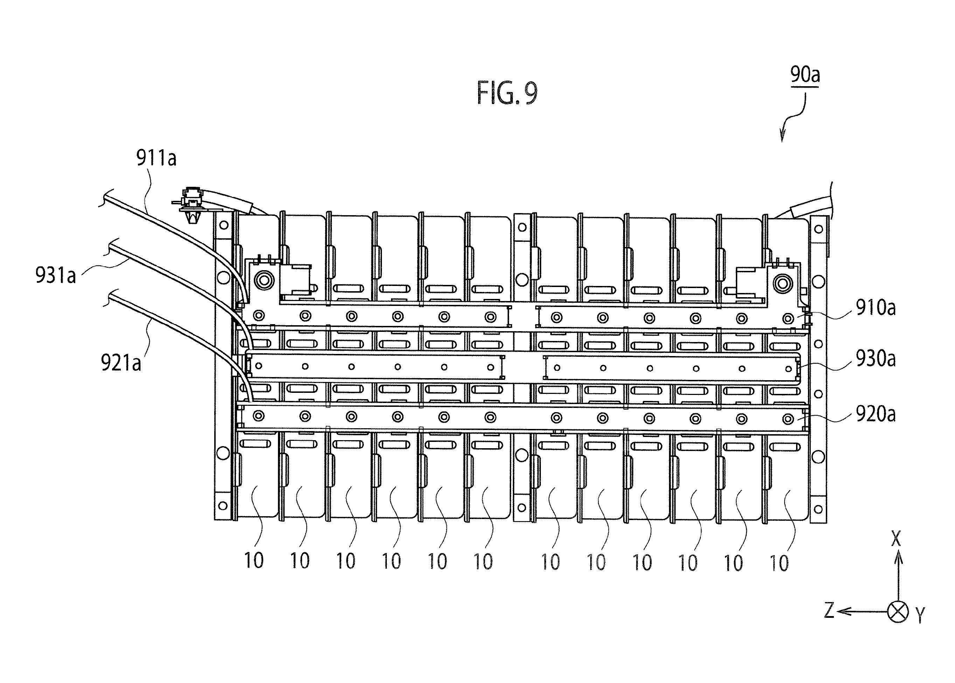

For example, in the embodiment described above, the battery module 10 having the two parallel two series connection configuration is used, and the battery pack 90 configured by combining the two battery modules 10 to have the connection configuration of four parallel two series is given as an example. However, the connection configuration of the battery modules forming the battery pack and the number of battery modules forming the battery pack are not particularly limited, and can be set as appropriate. For example, a configuration as shown in Fig. 9 may be employed. Specifically, the configuration includes 12 battery modules 10, and the terminals 60 of these 12 battery modules 10 are electrically connected to one another by an external bus bars 910a, the terminals 70 thereof are electrically connected to one another by an external bus bars 920a, and the terminals 80 are electrically connected to one another by an external bus bars 930a to form a battery pack 90a of 24 parallel two series. Note that, as shown in Fig. 9, in the battery pack 90a, voltage detection wires 911a, 921 a, 931a are connected respectively to the external bus bars 910a, 920a, 930a, and these wires are connected to a voltage sensor not illustrated.

Note that, for example, when the number of single cells 30 forming the battery module 10 which are connected in series is three in the embodiment described above, the number of voltage detection terminals 80 to be formed in the battery module 10 is set to a number corresponding to the number of single cells 30 connected in series. For example, when the number of single cells 30 connected in series is N (N is an integer equal to or larger than three), the number of voltage detection terminals 80 in the battery module 10 is N-1. Here, each battery module 10 has a connection configuration of L parallel N series, and when the number of battery modules forming the stacked body of the battery pack is K (K is an integer equal to or larger than two), the battery pack has a connection configuration of K×L parallel N series.

The present application claims the priority based on Japanese Patent Application No. 2009-197734 filed on August 28, 2009, and the entire contents of this application is incorporated in the present application by reference.

### INDUSTRIAL APPLICABILITY

The invention can reduce the number of voltage detection wires for detecting voltages of secondary batteries housed in multiple battery modules forming a battery pack, by electrically connecting voltage detection terminals of the battery modules by a bus bar.

### REFERENCE SIGNS LIST

- 10, 10A, 10B: BATTERY MODULE
- 20: CELL UNIT
- 30A TO 30D: SINGLE CELL
- 34: POSITIVE TAB
- 35: NEGATIVE TAB
- 50: CASE
- 60, 60A, 60B: EXTERNAL OUTPUT POSITIVE TERMINAL
- 61: INTERNAL BUS BAR
- 70, 70A, 70B: EXTERNAL OUTPUT NEGATIVE TERMINAL
- 71: INTERNAL BUS BAR
- 80, 80A, 80B: VOLTAGE DETECTION TERMINAL
- 81: INTERNAL BUS BAR
- 90, 90A: BATTERY PACK
- 910, 920, 930: EXTERNAL BUS BAR
- 911,921,931: VOLTAGE DETECTION WIRE

## Claims

1. A battery pack comprising:
a plurality of battery modules each including a stacked body in which a plurality of secondary batteries are stacked, a pair of output terminals, and a voltage detection terminal which is used to detect terminal voltages of the respective secondary batteries and which has a rated current equal to or larger than a rated current of the pair of output terminals; and
a bus bar electrically connecting the voltage detection terminals of the plurality of battery modules to each other.

2. The battery pack according to claim 1, wherein the bus bar is a bus bar capable of conducting a current equal to or larger than the rated current of the voltage detection terminal.

3. The battery pack according to claim 1 or 2, wherein the bus bar is formed of a plate-shaped conductive member.

4. The battery pack according to any one of claims 1 to 3, wherein one output terminals of the respective pairs of output terminals of the plurality of battery modules are connected to each other and the other output terminals of the respective pairs of output terminals are connected to each other respectively by bus bars different from the bus bar electrically connecting the voltage detection terminals to each other.

5. A method of manufacturing a battery pack including a plurality of battery modules comprising:
stacking a plurality of secondary batteries;
obtaining a cell unit by electrically connecting electrode tabs of each of the plurality of stacked secondary batteries respectively to a voltage detection terminal and a pair of output terminals, in conformity with an electrical circuit of the plurality of battery modules, the voltage detection terminal used to detect terminal voltages of the respective secondary batteries and having a rated current equal to or larger than a rated current of the pair of output terminals;
obtaining each of the plurality of battery modules by housing the cell unit in a case; and
stacking the plurality of battery modules and electrically connecting the voltage detection terminals of the plurality of battery modules to each other with a bus bar.
